# EUROPÄISCHE PATENTSCHRIFT

(11) **EP 1 300 634 B1**
(45) Veröffentlichungstag und Bekanntmachung des Hinweises auf die Patenterteilung: **29.08.2007**
(21) Anmeldenummer: 02450225.4
(22) Anmeldetag: 07.10.2002
(51) Int. Cl.: F24D 19/10, G05D 23/00, G05D 23/19

(54) **Vorrichtung zur Regelung einer Heizung, insbesondere eines Wohnhauses**
Apparatus for controlling a heating system, particularly in premises
Dispositif de réglage d'une installation de chauffage, en particulier d'une habitation

(30) Priorität: 05.10.2001 AT 15732001
(43) Veröffentlichungstag der Anmeldung: 09.04.2003
(73) Patentinhaber: Ochsner, Karl, Dipl.-Ing., 4020 Linz (AT)
(72) Erfinder: Ochsner, Karl, Dipl.-Ing., 4020 Linz (AT)
(74) Vertreter: Hübscher, Helmut

(56) Entgegenhaltungen:
- CH-A- 664 622
- DE-A- 3 502 873
- DE-A- 3 517 771

## Beschreibung

Die Erfindung bezieht sich auf eine Vorrichtung zur Regelung einer Heizung, insbesondere eines Wohnhauses, mit einem Heizungsregler, der einerseits an einen Außentemperaturfühler und anderseits an einen Heizkurvenspeicher zur Sollwertvorgabe einer Regelgröße in Abhängigkeit von der Außentemperatur angeschlossen ist, und mit einer mit einer Eingabe- und Anzeigeeinrichtung verbundenen Rechnerstufe zum Ändern der Heizkurve.

Aufgrund der physikalischen Eigenschaften von Gebäuden hinsichtlich der Wärmespeicherung und des insbesondere für Wärmeverluste maßgebenden Wärmeübergangs ist der Wärmebedarf für das Sicherstellen einer vorgegebenen Raumtemperatur von der Außentemperatur abhängig. Um diese Abhängigkeit zu berücksichtigen, werden Gebäudeheizungen mit Hilfe von Heizkurven geregelt, die beispielsweise die Vorlauftemperatur einer Heizung in Abhängigkeit von der Außentemperatur als Sollwert für den Heizungsregler vorgeben. Weicht die Raumtemperatur bei einer bestimmten Außentemperatur vom vorgegebenen Sollwert ab, so kann z. B. durch eine Parallelverschiebung der Heizkurve die Sollwertvorgabe für die Vorlauftemperatur für diese Außentemperatur an den Wärmebedarf des zu heizenden Gebäudes angeglichen werden. Die damit verbundene Fußpunktverlagerung der Heizkurve berücksichtigt allerdings noch nicht den sich mit der Außentemperatur ändernden, von den jeweiligen Wärmeeigenschaften des zu heizenden Gebäudes abhängigen Wärmebedarf, der in der Steigung der Heizkurve zum Ausdruck kommt. Dies bedeutet, daß bei einer hinsichtlich der Wärmecharakteristik eines zu heizenden Gebäudes zu flachen Heizkurve diese Heizkurve, ausgehend von einem genau an den Wärmebedarf angepaßten Betriebspunkt, einen zu geringen Wärmebedarf bei abnehmenden Außentemperaturen und einen zu hohen Wärmebedarf bei steigenden Außentemperaturen mit der Folge vorgibt, daß die Raumtemperatur mit der Außentemperatur ab- oder zunimmt. Aufgrund einer für die wärmetechnischen Gebäudeeigenschaften zu großen Steigung der Heizkurve besteht bei abnehmenden Außentemperaturen ein Überangebot an Wärme, während bei steigenden Außentemperaturen das durch die Heizkurve bestimmte Wärmeangebot zu niedrig ist. Zur Anpassung einer Heizkurve an die durch ein bestimmtes Gebäude gegebenen wärme- und heiztechnischen Voraussetzungen muß daher auch die Steigung der Heizkurve angeglichen werden, was im allgemeinen nur bei einem weiteren, auf eine andere Außentemperatur bezogenen Betriebspunkt durchgeführt werden kann, und zwar mit der Gefahr, daß der bereits eingestellte Betriebspunkt wieder zu verstellen ist, so daß nur nach einer aufwendigen, wiederholten Anpassung der Heizkurve eine die Eigenschaften des jeweiligen Gebäudes und der Heizungsanlage mit ausreichender Genauigkeit berücksichtigende Sollwertvorgabe möglich wird.

Die Offenlegunsschrift DE 3517771 A1 zeigt eine Vorrichtung zur Regelung einer Heizung nach dem Oberbegriff des Anspruchs 1.

Der Erfindung liegt somit die Aufgabe zugrunde, eine Vorrichtung zur Regelung einer Heizung, insbesondere eines Wohnhauses, der eingangs geschilderten Art so auszugestalten, daß eine ausreichend genaue Sollwertvorgabe für den Heizungsregler mit einfachen Mitteln sichergestellt werden kann, um auch bei sich ändernden Außentemperaturen in Abhängigkeit von den hiefür maßgebenden Eigenschaften des zu heizenden Gebäudes bzw. der Heizungsanlage eine gleichmäßige Raumtemperatur einhalten zu können.

Die Erfindung löst die gestellte Aufgabe dadurch, daß die Rechnerstufe einen Programmspeicher zur Berechnung der Heizkurve aus wenigstens zwei über die Eingabe- und Anzeigeeinrichtung für unterschiedliche Außentemperaturen vorgebbaren Heizkurvenpunkten aufweist und daß die jeweils aus einem über die Eingabe- und Anzeigeeinrichtung neu vorgegebenen Heizkurvenpunkt und aus einem Heizkurvenpunkt der im Heizkurvenspeicher abgespeicherten Heizkurve neu berechnete Heizkurve über die Rechnerstufe in den Heizkurvenspeicher einlesbar ist.

Da aufgrund des im Programmspeicher abgespeicherten Programms die Heizkurve aus zwei Heizkurvenpunkten, die unterschiedlichen Außentemperaturen zugehören, berechnet und im Heizkurvenspeicher als Sollwertvorgabe für den Heizungsregler abgelegt werden kann, kann die Heizkurve mit einem vergleichsweise geringen Aufwand an die wärmetechnischen Vorgaben des Gebäudes und der Heizungsanlage angepaßt werden, und zwar unter Berücksichtigung der hiefür charakteristischen Steigung der Heizkurve. Wird von einer auf Erfahrungswerten beruhenden Grundeinstellung einer Heizkurve ausgegangen, so kann ein auf eine gemessene Außentemperatur bezogener Heizkurvenpunkt anhand der gemessenen Raumtemperatur dahingehend überprüft werden, ob sich die durch diesen Heizkurvenpunkt bestimmte Sollwertvorgabe für die Regelgröße des Heizungsreglers mit dem tatsächlichen Wärmebedarf deckt. Ist eine Korrektur erforderlich, so wird die Heizkurve mit Hilfe des korrigiert einzugebenden Heizkurvenpunktes neu berechnet, so daß aufgrund der Korrektur lediglich eines Punktes eines Punktepaares eine geänderte Steigung für die Heizkurve erhalten wird. Obwohl im allgemeinen mit einer linearen Abhängigkeit zwischen der Außentemperatur und dem Sollwert für die Regelgröße einer Gebäudeheizung die maßgebenden wärmetechnischen Verhältnisse ausreichend genau erfaßt werden können, können für Feinabstimmungen Abweichungen von einer linearen Heizkurve durch die Vorgabe zusätzlicher Heizkurvenpunkte ohne weiteres berücksichtigt werden.

Um bei einer Korrektur der Heizkurve übermäßige Änderungen hinsichtlich der Steigung zu vermeiden, werden zur Neuberechnung einer Heizkurve lediglich Heizkurvenpunkte berücksichtigt die einem unteren und einem oberen, in entsprechenden Speichern abgelegten Meßbereich des Außentemperaturfühlers zugehören. Dies bedeutet, daß eine Korrektur nur mit Meßwerten innerhalb der vorgegebenen Außentemperaturbereiche durchgeführt werden kann. Dabei werden im oberen Außentemperaturbereich die unteren Heizkurvenpunkte und im niedrigen Außentemperaturbereich die oberen Heizkurvenpunkte mit dem Vorteil korrigiert, daß die bereits korrigierten oberen Heizkurvenpunkte bei einer Verlagerung der unteren Heizkurvenpunkte und umgekehrt die korrigierten unteren Heizkurvenpunkte bei einer Verlagerung der oberen Heizkurvenpunkte nicht verstellt werden.

Da die für die Sollwertvorgabe der Regelgröße maßgebende Heizkurve anhand der Raumtemperatur in Abhängigkeit von der Außentemperatur überprüft wird und sich Änderungen der Außentemperatur erst mit einer Verzögerung auf den Verlauf der Raumtemperatur auswirken, empfiehlt es sich, die Rechnerstufe mit einem Mittelwertbildner für die über einen vorgegebenen Zeitraum gemessenen Außentemperaturen zu versehen, um für die Heizungsregelung nicht maßgebende, kurzfristige Außentemperaturschwankungen im Hinblick auf die Festlegung der Heizkurve unterdrücken zu können.

In der Zeichnung ist der Erfindungsgegenstand beispielsweise dargestellt. Es zeigen
- Fig. 1: eine erfindungsgemäße Vorrichtung zur Regelung einer Heizung, insbesondere eines Wohnhauses, in einem schematischen Blockschaltbild und
- Fig. 2: eine Heizkurve als Funktion der Vorlauftemperatur einer Heizung von der Außentemperatur im Zusammenhang mit einer Korrektur eines Heizkurvenpunktes.

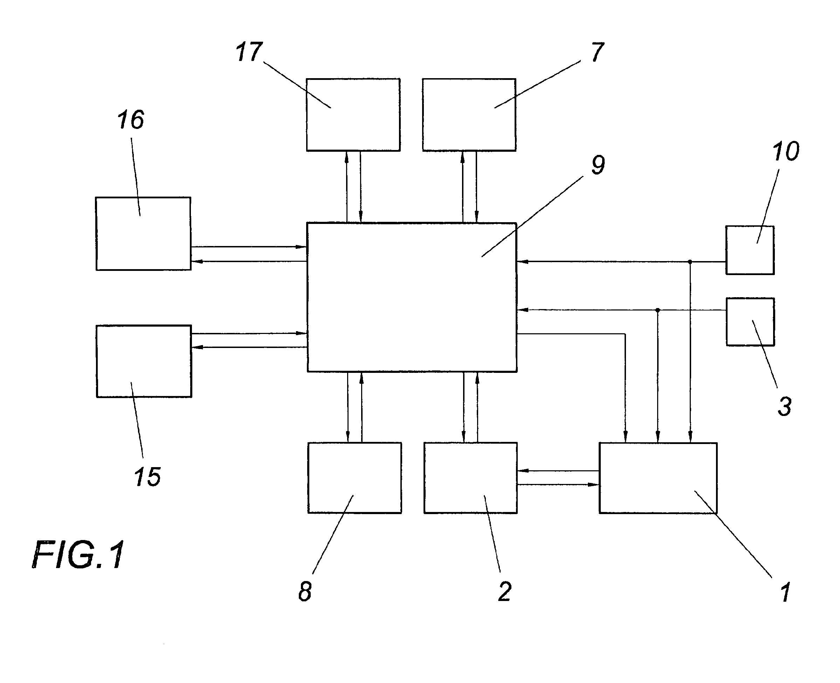

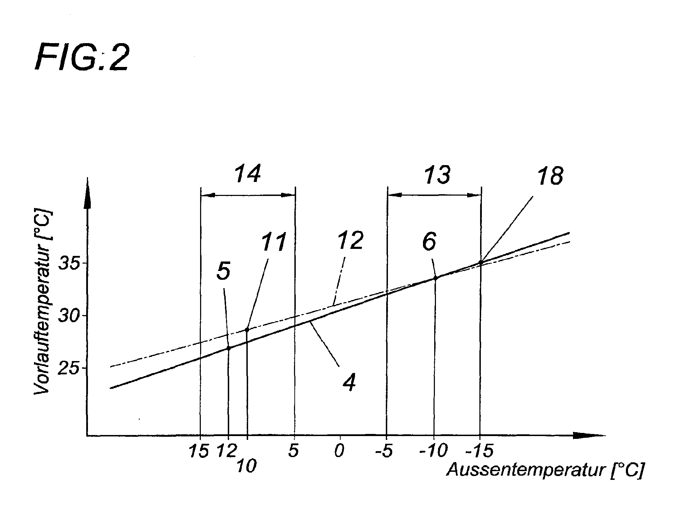

Gemäß der Fig. 1 wird der einer herkömmlichen Heizung zugehörige Heizungsregler 1 einerseits mit einem Heizkurvenspeicher 2 und anderseits mit einem Außentemperaturfühler 3 verbunden, um die Heizung in Abhängigkeit von der jeweils gemessenen Außentemperatur so zu regeln, daß ein vorgegebener Sollwert für die Raumtemperatur sichergestellt wird. Wie der Fig. 2 entnommen werden kann, die den für das zu heizende Gebäude gegebenen Zusammenhang zwischen der auf der Abszisse aufgetragenen Außentemperatur und der auf der Ordinate aufgetragenen Vorlauftemperatur der Heizung in Form einer Heizkurve 4 unter Berücksichtigung der jeweiligen Heizungseigenschaften zeigt, kann mit Hilfe der Heizkurve 4 für eine bestimmte Außentemperatur die zur Erreichung einer vorgegebenen Raumtemperatur erforderliche Vorlauftemperatur als Regelgröße für den Heizungsregler 1 abgelesen werden. Für die Einhaltung einer vorgegebenen Raumtemperatur bei sich ändernder Außentemperatur ist es daher von entscheidender Bedeutung, daß die Heizkurve 4 die hiefür maßgebenden wärmetechnischen Eigenschaften des zu heizenden Gebäudes und der zur Gebäudeheizung eingesetzten Heizung bzw. des angeschlossenen Wärmeverteilersystems ausreichend genau berücksichtigt.

Zu diesem Zweck wird zunächst eine Heizkurve 4 aus zwei Heizkurvenpunkten 5 und 6 berechnet, die Erfahrungswerte darstellen können. Obwohl die Heizkurvenpunkte 5 und 6 vorteilhaft entsprechend der der Heizungsberechnung zugrundegelegten Temperaturen gewählt werden, können für die Heizkurvenberechnung an sich beliebige Außentemperaturen herangezogen werden. Gemäß der Fig. 2 sind die Sollwerte der Vorlauftemperatur für eine Außentemperatur von +12°C und von -10°C vorgegeben. Die Heizkurvenpunkte 5 und 6 werden über eine Eingabe- und Anzeigeeinrichtung 7 einer an einen Programmspeicher 8 angeschlossenen Rechnerstufe 9 zugeleitet, die die Heizkurve 4 mit Hilfe eines aus dem Programmspeicher 8 abrufbaren Programms aus den eingegebenen Heizkurvenpunkten 5 und 6 berechnet und im Heizkurvenspeicher 2 als Sollwertvorgabe für den Heizungsregler 1 abspeichert. Wird aufgrund der durch die Heizkurve 4 geführten Regelung der Heizung festgestellt, daß die über einen Raumtemperaturfühler 10 erfaßbare Raumtemperatur vom durch die Heizkurve 4 vorgegebenen Sollwert abweicht, so kann die Heizkurve 4 in einfacher Weise entsprechend korrigiert werden. Wird nach der Fig. 2 angenommen, daß die Raumtemperatur gegenüber dem durch die Heizkurve 4 vorzugebenden Sollwert zu niedrig ist, so muß die Heizkurve 4 in diesem Bereich entsprechend angehoben werden. Wurde die Abweichung der Raumtemperatur vom Sollwert beispielsweise bei +10°C Außentemperatur festgestellt, so kann zur Neuberechnung der Heizkurve 4 ein korrigierter Heizkurvenpunkt 11 vorgegeben werden, der die auf die Außentemperatur von +10°C bezogene höhere Vorlauftemperatur berücksichtigt. Durch eine Neuberechnung der Heizkurve über die Rechnerstufe 9 anhand des ursprünglichen Heizkurvenpunktes 6 und des korrigierten Heizkurvenpunktes 11 wird der korrigierte Heizkurvenverlauf 12 erhalten, abgespeichert und dem Heizungsregler 1 vorgegeben. Nach einer allenfalls auch bei niedrigen Außentemperaturen erforderlichen Korrektur kann somit die Heizkurve mit ausreichender Genauigkeit an die jeweiligen wärmetechnischen Vorgaben des zu beheizenden Gebäudes, der hiefür eingesetzten Heizung und des Wärmeverteilersystems angepaßt werden.

Um eine entsprechend feinfühlige Anpassung der Heizkurve 4 an die jeweils herrschenden wärmetechnischen Bedingungen zu ermöglichen, sollen die Außentemperaturen für die der Heizkurvenberechnung zugrundegelegten Heizkurvenpunkte entsprechend weit auseinanderliegen. Zu diesem Zweck werden für die Heizkurvenberechnung nur Heizkurvenpunkte zugelassen, die in einem unteren Außentemperaturbereich 13 und in einem oberen Außentemperaturbereich 14 liegen. Diese vorgebbaren, von den jeweiligen klimatischen Verhältnissen abhängigen Außentemperaturbereiche sind in entsprechenden Speichern 15 und 16 abgespeichert, um zu überprüfen, ob die durch die Eingabe- und Anzeigeeinrichtung 7 eingelesenen Heizkurvenpunkte zur Heizkurvenberechnung zulässig sind.

Um kurzfristige, für die Heizungsregelung nicht relevante Außentemperaturschwankungen bei der Anpassung der Heizkurve 4 zu unterdrücken, kann bei der Überprüfung der Raumtemperatur in den vorgegebenen Außentemperaturbereichen 13 und 14 ein über eine vorgegebene Zeitspanne errechneter Mittelwert für die Außentemperatur herangezogen werden. Die Rechnerstufe 9 umfaßt folglich einen entsprechenden Mittelwertbildner 17 für die Außentemperatur. Darüber hinaus empfiehlt es sich, den Heizungsregler 1 ebenfalls mit dem Mittelwert der Außentemperatur zu beaufschlagen.

Um von der Außentemperatur unabhängige Änderungen der Raumtemperatur berücksichtigen zu können, kann der Heizungsregler 1 über ein entsprechendes Programm solche Raumtemperaturschwankungen berücksichtigen.

Zur Neuberechnung einer Heizkurve anhand eines korrigierten und eines vorhandenen Heizkurvenpunktes braucht selbstverständlich nicht auf einen eingegebenen, vorhandenen Heizkurvenpunkt zurückgegriffen zu werden. Es kann hiefür auch ein berechneter Punkt herangezogen werden, um beispielsweise die Berechnung bei einer möglichst großen Außentemperaturspanne durchführen zu können. Für die Berechnung der neuen Heizkurve könnte im Ausführungsbeispiel nach der Fig. 2 somit neben dem korrigierten Heizkurvenpunkt 11 der berechnete Heizkurvenpunkt 18 herangezogen werden, der auf die tiefste Temperatur des unteren Außentemperaturbereiches 13 bezogen ist. Damit ergibt sich eine etwas geringere Steigungsänderung der neu berechneten Heizkurve, wobei die Vorlauftemperatur über einen größeren Außentemperaturbereich angehoben wird, was im allgemeinen gute Anpassungsbedingungen schafft.

## Patentansprüche

1. Vorrichtung zur Regelung einer Heizung, insbesondere eines Wohnhauses, mit einem Heizungsregler (1), der einerseits an einen Außentemperaturfühler (3) und anderseits an einen Heizkurvenspeicher (2) zur Sollwertvorgabe einer Regelgröße in Abhängigkeit von der Außentemperatur angeschlossen ist, und mit einer mit einer Eingabe- und Anzeigeeinrichtung (7) verbundenen Rechnerstufe (9) zum Ändern der Heizkurve (4), **dadurch gekennzeichnet, daß** die Rechnerstufe (9) einen Programmspeicher (8) zur Berechnung der Heizkurve (4) aus wenigstens zwei über die Eingabe- und Anzeigeeinrichtung (7) für unterschiedliche Außentemperaturen vorgebbaren Heizkurvenpunkten (5, 6) aufweist und daß die jeweils aus einem über die Eingabe- und Anzeigeeinrichtung (7) neu vorgegebenen Heizkurvenpunkt und aus einem Heizkurvenpunkt der im Heizkurvenspeicher (2) abgespeicherten Heizkurve (12) neu berechnete Heizkurve (12) über die Rechnerstufe (9) in den Heizkurvenspeicher (2) einlesbar ist, wobei
die Rechnerstufe (9) mit Speichern (15, 16) für einen unteren und einen oberen Außentemperaturbereich zur Bestimmung von für die programmbedingte Heizkurvenberechnung zulässigen Heizkurvenpunkten (5, 6, 11) versehen ist.

2. Vorrichtung nach Anspruch 1, **dadurch gekennzeichnet, daß** die Rechnerstufe (9) einen Mittelwertbildner (17) für die über einen vorgegebenen Zeitraum gemessenen Außentemperaturen zur programmbedingten Berechnung der Heizkurve (4, 12) umfaßt.

## Claims

1. Apparatus for controlling a heating system, in particular of a house, with a heating regulator (1) which is connected on the one hand to an outside temperature sensor (3) and on the other hand to a heating curve memory (2) for defining a reference value of a control variable in dependence upon the outside temperature (7), and with a computer stage (9) connected to an input and display device (7) for changing the heating curve (4), **characterised in that** the computer stage (9) comprises a program memory (8) for calculating the heating curve (4) from at least two heating curve points (5, 6) definable via the input and display device (7) for different outside temperatures and **in that** the heating curve (12) newly calculated from a heating curve point newly defined via the input and display device (7) and from a heating curve point of the heating curve (12) stored in the heating curve memory (2) is read into the heating curve memory (2) by means of the computer stage (9), wherein the computer stage (9) is provided with memories (15, 16) for a lower and an upper outside temperature range for determining heating curve points (5, 6, 11) admissible for the program-dependent heating curve calculation.

2. Apparatus according to claim 1, **characterised in that** the computer stage (9) comprises an averaging element (18) for the outside temperatures measured over a predefined time period for the program-dependent calculation of the heating curve (4, 12).

## Revendications

1. Dispositif de réglage d'une installation de chauffage, en particulier d'une habitation, avec un régulateur de chauffage (1), qui, d'une part, est raccordé à une sonde de température extérieure (3) et, d'autre part, à une mémoire à courbes de chauffage (2) pour l'attribution d'une valeur de consigne d'une grandeur de régulation, en fonction de la température extérieure, et avec un étage de calculateur (9), relié à un dispositif d'introduction et d'affichage (7) pour modifier la courbe de chauffage (4), **caractérisé en ce que** l'étage de calculateur (9) présente une mémoire à programmes (8) pour calculer la courbe de chauffage (4) à partir d'au moins deux points de courbe de chauffage (5, 6) susceptibles d'être prédéterminés pour différentes températures extérieures, par l'intermédiaire du dispositif d'introduction et d'affichage (7), et **en ce que** la courbe de chauffage (12), nouvellement calculée, à partir d'un point de courbe de chauffage nouvellement prédéterminé par l'intermédiaire du dispositif d'introduction et d'affichage (7) et à partir d'un point de courbe de chauffage de la courbe de chauffage (12) mémorisée dans la mémoire à courbe de chauffage (2), est susceptible d'être enregistrée dans la mémoire à courbes de chauffage (2) par l'étage de calculateur (9), où l'étage de calculateur (9) est muni de mémoires (15, 16) pour une plage de températures extérieures inférieures et une autre supérieures, afin de déterminer des points de courbe de chauffage (5, 6, 11) admissibles pour le calcul par programme des courbes de chauffage.

2. Dispositif selon la revendication 1, **caractérisé en ce que** l'étage de calculateur (9) comprend un formateur de valeur moyenne (17) pour les températures extérieures, mesurées sur un intervalle de temps prédéterminé, afin de calculer par programme la courbe de chauffage (4, 12).
